Europäisches Patentamt

European Patent Office

Office européen des brevets

(11) Numéro de publication: **0 493 569 B1**

(12) **FASCICULE DE BREVET EUROPEEN**

(45) Date de publication du fascicule du brevet: **04.10.95** (51) Int. Cl.⁶: **B60C 15/02**, B60C 5/16

(21) Numéro de dépôt: **91913366.0**

(22) Date de dépôt: **12.07.91**

(86) Numéro de dépôt internationale :
**PCT/FR91/00570**

(87) Numéro de publication internationale :
**WO 92/01577 (06.02.92 92/04)**

(54) **ENSEMBLE ROULANT COMPOSE D'UN PNEUMATIOUE DONT LES BOURRELETS ONT DES BASES TRONCONIOUES, D'UNE JANTE DE MONTAGE A SIEGES PLATS, ET D'ADAPTATEURS ANNULAIRES EN CAOUTCHOUC ET ADAPTATEUR CON U POUR CET ENSEMBLE.**

(30) Priorité: **17.07.90 FR 9009213**

(43) Date de publication de la demande:
**08.07.92 Bulletin 92/28**

(45) Mention de la délivrance du brevet:
**04.10.95 Bulletin 95/40**

(84) Etats contractants désignés:
**AT BE CH DE DK ES FR GB IT LI LU NL SE**

(56) Documents cités:
**DE-A- 2 452 306**
**GB-A- 2 085 375**

**PATENT ABSTRACTS OF JAPAN vol. 11, no. 111 (M-578)(2558) 8 Avril 1987 & JP-A-61257 304 (SUMITOMO RUBBER IND. LTD.) 14 Novembre 1986**

(73) Titulaire: **COMPAGNIE GENERALE DES ETA-BLISSEMENTS MICHELIN - MICHELIN & CIE**
**12, Cours Sablon**
**F-63040 Clermont-Ferrand Cédex (FR)**

(72) Inventeur: **GERGELE, Jean**
**27, rue de Bellevue,**
**S.-Hippolyte**
**F-63140 Châtelguyon (FR)**

(74) Mandataire: **Devaux, Edmond-Yves et al**
**Michelin & Cie**
**Service SRK. Brevets**
**23, Place des Carmes**
**F-63040 Clermont-Ferrand Cédex (FR)**

## Description

La présente invention concerne un ensemble roulant composé d'un pneumatique, d'une jante, et d'éléments annulaires montés entre les bourrelets du pneumatique et la jante, éléments dénommés adaptateurs pneumatique-jante.

Afin d'éviter la manipulation possible de nombreuses pièces métalliques lors du montage d'un pneumatique "Poids-Lourd à sièges plats" sur sa jante de service, il a été proposé des ensembles roulants comprenant d'une part une jante monobloc, en particulier une jante à "sièges 15°" et d'autre part un pneumatique dont les bourrelets présentent par rapport à l'axe de rotation du pneumatique des sièges inclinés d'un angle généralement supérieur à 15°.

Ces ensembles roulants ont de grands avantages. Les risques de projection de pièces métalliques étant supprimés, une plus grande sécurité est assurée, les pneumatiques utilisés étant des pneumatiques sans chambre à air, l'absence de celle-ci et du flap procure une économie non négligeable tout en évitant les frottements entre chambre et pneumatique et ainsi les échauffements et les crevaisons de la chambre à air. La facilité de montage et de démontage est accrue, et l'équilibrage de l'ensemble tournant est amélioré par la suppression des balourds dus à la chambre, au flat, aux cercles de montage.

Afin de rendre le montage et le démontage d'un pneumatique, sur une jante normalisée monobloc, plus facile, la demande de brevet GB 2 085 375 décrit un ensemble roulant composé d'un pneumatique, d'une jante en trois parties comprenant une jante normalisée monobloc (en une seule pièce) et deux adaptateurs annulaires, en matériau élastomérique, insérés entre les bourrelets de pneumatique et les sièges de jante, le pneumatique étant un pneumatique de dimension normalisée sans chambre à air indépendante et destiné à être utilisé sur une jante ayant des sièges tronconiques, et les adaptateurs ayant un contour extérieur adapté d'une part au contour de la jante sur laquelle il repose et d'autre part au contact du bourrelet du pneumatique. Chaque adaptateur est renforcé intérieurement, entre ses deux faces quasi verticales, par deux tringles inextensibles, disposées circonférentiellement, au moins une nappe de renforcement enveloppant les deux tringles de l'adaptateur.

Les jantes à sièges inclinés à 15°, qui forment avec les pneumatiques correspondants les ensembles les plus répandus, mais aussi les jantes en une seule pièce et à sièges tronconiques inclinés à 5°, comportent dans leur partie centrale une gorge de montage. Le diamètre radialement intérieur de cette gorge est un obstacle majeur aux choix des tambours de freins ou d'étriers de freins à disques, de diamètres plus grands, ce qui permettrait une efficacité de freinage supérieure. En outre, du fait de la présence de la gorge centrale, la fabrication d'une jante à sièges inclinés demande un soin particulier afin d'éviter les problèmes de fatigue du métal la composant.

Afin de remédier aux inconvénients cités, tout en conservant les avantages procurés par l'utilisation d'un ensemble roulant composé d'une jante à sièges inclinés et du pneumatique à bases de bourrelets tronconiques destiné à être monté sur ladite jante, l'invention propose un ensemble roulant composé du même pneumatique, monté aux moyens d'adaptateurs annulaires sur une jante en une seule pièce dont le fond est parallèle à l'axe de rotation et dont les rebords de jante sont fixes. Les adaptateurs annulaires de l'ensemble, ayant une face radialement extérieure différente de la face radialement intérieure, et afin d'éviter le fluage du caoutchouc vulcanisé formant adaptateur, suite aux efforts intenses de compression qu'il doit subir, soit en statique, soit en dynamique, il est nécessaire de renforcer méridiennement et circonférentiellement ces adaptateurs.

Conformément à l'invention, l'ensemble roulant composé d'un pneumatique (P) d'une jante (J) et deux adaptateurs annulaires ($S_1$, $S_2$) en matériau élastomérique vulcanisé, indépendants insérés entre les bourrelets (3) du pneumatique (P) et la jante (J), le pneumatique (P) étant un pneumatique de dimensions normalisées sans chambres à air indépendante et destiné à être utilisé sur une jante (J') normalisée ayant des sièges tronconiques et des rebords de jante de hauteur (H), chaque adaptateur ayant deux faces quasi verticales et un contour extérieur adapté d'une part au contour de la jante (J) sur laquelle il repose et d'autre part au contour du bourrelet du pneumatique connu (P), et étant renforcé par un amas $N_0$ de fils ou câbles inextensibles et disposés circonférentiellement, cet amas $N_0$ étant localisée entre les deux faces quasi verticales de l'adaptateur, est caractérisé en ce que
- la jante de service (J), destinée à recevoir les adaptateurs ($S_1$, $S_2$) est démunie de gorge et constituée principalement de deux rebords de jante de hauteur (H) et d'un fond de jante cylindrique, dont le diamètre $\varnothing_{JS}$ est tel que

$$\sqrt{(\varnothing_{JS} + H)^2 + K^2} < \varnothing_{SE}$$

$\varnothing_{SE}$ étant le diamètre nominal de la jante (J') normalement utilisé pour le pneumatique (P) et K étant la distance axiale séparant le sommet du rebord de jante de l'extrémité du fond de jante cylindrique, alors que la largeur (W) de la jante (J) est comprise entre 1,05 et 1,10 fois la largeur (A) de la jante (J') et en ce que,

- le matériau élastomérique qui constitue chaque adaptateur ($S_1$, $S_2$), ayant un module élastique de compression au moins égale à 8MPa, est entouré par une armature $N_{90}$ formé d'au moins une nappe de fils ou câbles méridiens.

Sont dits inextensibles des fils ou câbles présentant sous une charge égale à 10 % de la charge de rupture du fil ou câble un allongement relatif inférieur à 0,5 %.

L'emploi d'un tel ensemble roulant permet non seulement la résolutaion du problème à la base de l'invention, mais présente en outre un avantage surprenant. En effet, bien que les sièges de jante soient rapprochés du système de freinage et que la jante transmette plus de calories à l'ensemble élastomérique adaptateur-bourrelet du pneumatique, les bourrelets du pneumatique sont cependant après roulage intacts tant au point de vue dégradation du caoutchouc par la chaleur qu'au point de vue usure par frottement.

Afin d'assurer une mise en place sur la jante des adaptateurs qui soit efficace, la jante de service a des rebords de jante analogues aux rebords de la jante normalisée normalement utilisée pour le pneumatique considéré, ces rebords de jante étant reliés au fond de jante cylindrique par des portions en arc de cercle dont le rayon est égal au rayon des portions de raccordement utilisées sur la jante normalement utilisée.

Préférentiellement, le profil radialement extérieur d'un adaptateur, vu en section méridienne, est strictement identique au profil de la section méridienne de l'ensemble rebord-siège de la jante à sièges inclinés normalisée sur laquelle est monté normalement le pneumatique utilisé. En particulier, le siège incliné de l'adaptateur tronconique a avantageusement des génératrices formant avec l'axe de rotation des angles de 15° ± 1°.

Quant au profil radialement intérieur de l'adaptateur, vu en section méridienne, il est adapté au profil de la jante à fond plat conforme à l'invention, et se compose essentiellement d'une partie rectiligne faisant avec l'axe de rotation de l'ensemble un angle compris entre 0° et 10°, le diamètre de cette face intérieure étant compris entre 0,995 fois et 0,985 fois le diamètre ($\varnothing_{JS}$) de la jante de service.

Afin d'assurer une étanchéité parfaite de l'adaptateur à la jante de service, il est avantageux de prévoir sur la face radialement intérieure de l'adaptateur, d'une part sur la partie horizontale ou inclinée de cette face et d'autre part sur la partie courbée de cette même face, deux zones pourvues d'un matériau élastomérique ayant des propriétés équivalentes ou très proches des propriétés des gommes intérieures étanches utilisées couramment dans les pneumatiques sans chambre à air indépendante.

Afin de maintenir fermement en place d'une part le bourrelet du pneumatique sur l'adaptateur et d'autre part l'adaptateur sur la jante, des moyens connus en soi pourront être utilisés, tels que par exemple un sillon circonférentiel de faible dimension aménagé dans la jante et correspondant à une saillie de la face intérieure de l'adaptateur, celui-ci ayant par ailleurs une pointe axialement intérieure sous forme de protubérance formant butoir pour la pointe du bourrelet.

La mise en place correcte des adaptateurs sera avantageusement contrôlée lors du gonflage du pneumatique. A cet effet, les parties de la jante destinées à être recouvertes par les adaptateurs seront munies d'orifices de faible dimension, ce qui rend impossible le gonflage si les orifices ne sont pas correctement recouverts par les adaptateurs.

De même, le gonflage du pneumatique de l'ensemble se fera avantageusement par une valve intégrée à l'adaptateur, comme montré dans le brevet FR 2 257 442.

Bien que l'ensemble roulant usuellement employé comporte un seul pneumatique monté sur une seule jante à l'aide de deux adaptateurs, l'invention s'applique de manière identique à un ensemble de roues jumelées et des pneumatiques correspondants, et permet alors avantageusement de remplacer les deux jantes jumelées par une seule jante, présentant, en son milieu, deux rebords, assemblés entre eux, et un seul disque.

La description qui va suivre en regard du dessin annexé, donné à titre d'exemple, fera mieux comprendre comment l'invention peut être mise en oeuvre.

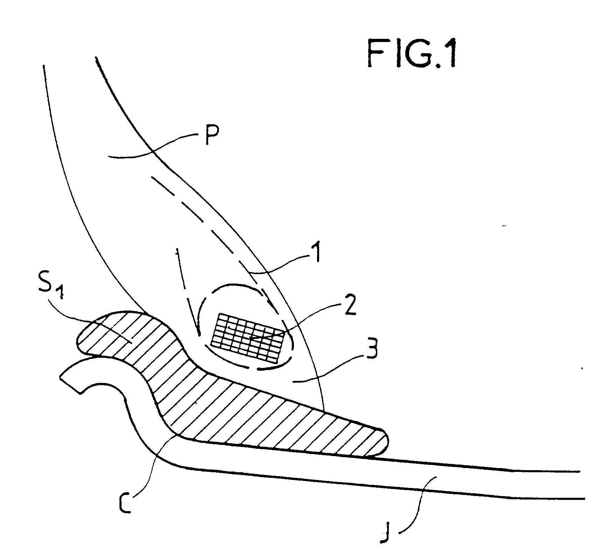

Sur ce dessin, la figure 1 représente, vu en section méridienne, l'ensemble tournant avec le pneumatique (P), dont les bourrelets ont des sièges inclinés à plus de 15°, la jante (J) et un adaptateur ($S_1$), le 2e adaptateur ($S_2$) étant identique à ($S_1$).

Les figures 2A, 2B, 2C représentent respectivement et isolèment, le bourrelet du pneumatique (P), l'adaptateur ($S_1$), et la jante (J) principalement avec son rebord.

La figure 3 représente une solution préférentielle d'adaptateur quant à sa constitution, alors que la figure 4 représente une forme préférentielle du même adaptateur.

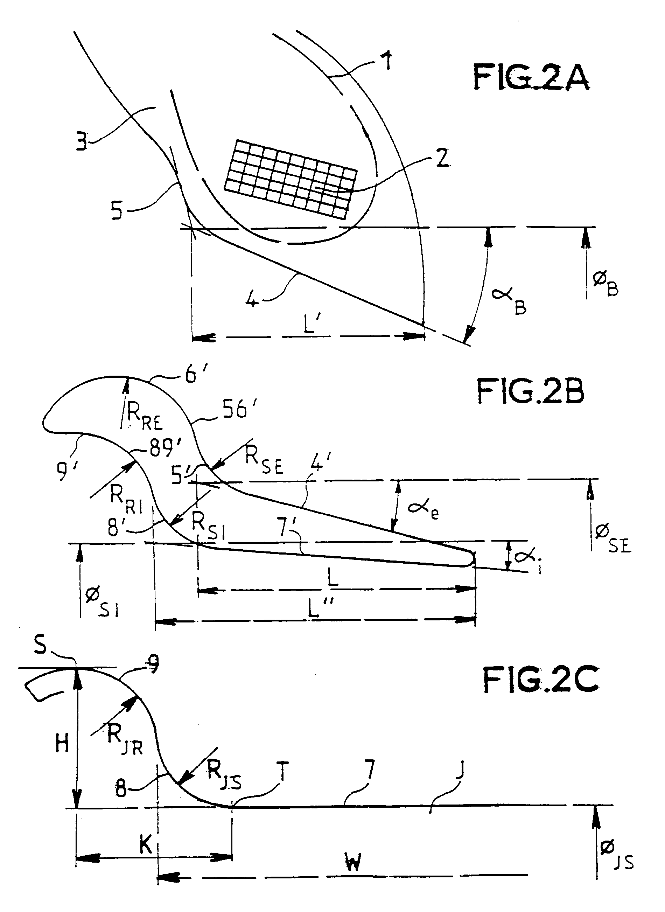

Le pneumatique (P) est un pneumatique à armature de carcasse radiale (1) ancrée dans chaque bourrelet (3) à une tringle (2) dite à fils rectangulaires inextensibles. Comme montré sur la figure 2A, le bourrelet (3) a un siège (4) incliné par rapport à l'axe de rotation de l'ensemble roulant d'un angle $\alpha_B$, égal à 20°. Quant au diamètre ($\Phi_B$) du bourrelet (3), il est mesuré à l'intersection de la génératrice (4) du siège tronconique et de la paroi (5) du bourrelet sensiblement perpendiculaire à l'axe de rotation de l'ensemble ; et ce diamètre ($\Phi_B$) est égal à 1 fois le diamètre nominal de la jante standard (J') à sièges inclinés à 15°, recommandée pour le montage du pneumatique (P).

Si le pneumatique (P) est un 315/80 R 22.5, la jante (J') recommandée est dite 22.5x900 et ses dimensions standardisées sont connues par le livre de "the Tire and Rim Association" par exemple.

Comme montré sur la figure 2B, le contour ou profil de la face radialement extérieure de l'adaptateur ($S_1$) répond strictement aux données normalisées : ainsi la génératrice (4') du siège de l'adaptateur ($S_1$) fait avec l'axe de rotation de l'ensemble roulant un angle $\alpha_S$ égal à 15° ± 1° ; le diamètre ($\Phi_{SE}$) correspond au diamètre nominal de la jante (J') correspondante, de même la génératrice (4') est prolongée axialement à l'extérieur par un arc de cercle (5') de rayon ($R_{SE}$) égal à 8 mm, cet arc de cercle (5') de rayon ($R_{SE}$) étant tangent a un autre arc de cercle (6') de rayon ($R_{RE}$) égal à 12,7 mm, ces deux arcs de cercle formant autour de leur point de tangence une zone (56') sensiblement verticale, et le contour (4', 5', 6') étant identique au contour de la jante (J') standardisée.

Quant au contour ou profit de la face radialement intérieure de l'adaptateur ($S_1$), il se compose d'une partie (7') inclinée par rapport à l'axe de rotation du pneumatique d'un angle $\alpha_i$ égal à 5° et dont le diamètre ($\Phi_{SI}$) détermine avec le diamètre ($\varnothing_{SE}$), l'épaisseur (E) de l'adaptateur. La génératrice (7') est prolongée axialement a l'extérieur par un arc de cercle (8') de rayon ($R_{SI}$) égal à 1,5 fois ($R_{SE}$), cet arc de cercle étant tangent à un autre arc de cercle (9') de rayon ($R_{RI}$) égal à ($R_{RE}$), c'est-à-dire 12,7 mm, ces deux arcs de cercle formant autour de leur point de tangence une zone (89') quasi verticale, parallèle à la portion (56') de la face radialemnt extérieure:

La largeur (L) axiale de la portion inclinée (4') de la face radialement extérieure de l'adaptateur ($S_1$) est au moins égale à la largeur (L) minimale normalisée du siège de jante à 15°, et donc supérieure à la largeur axiale (L') du bourrelet (3) du pneumatique (P). Quant à la largeur (L'') de la face radialement intérieure (7'), sa différence avec la largeur (L) L''-L est égale à la quantité W-A/2, c'est-à-dire la demi différence entre la largeur (W) de la jante de service (J) et la largeur (A) de la jante (J') normalement utilisée pour le pneumatique (P)

Il reste évident que les extrémités axialement intérieure et extérieure de l'adaptateur ($S_1$) sont dans la plupart des cas sous forme d'arrondis à faible rayon de courbure.

Quant à la jante de la figure 2C, sur laquelle vont se monter deux adaptateurs et ensuite le pneumatique (P), son profil radialement extérieur, vu en section méridienne est composé d'une partie cylindrique (7) de diamètre ($\Phi_{JS}$) tel que le diamètre ($\Phi_{SI}$) de la face intérieure (7') de l'adaptateur ($S_1$) soit compris entre 0,995 et 0,985 fois ($\Phi_{JS}$), ce qui permet un léger serrage de l'adaptateur sur la jante.

Cette partie cylindrique (7) est prolongée axialement à l'extérieur par un arc de cercle (8) de rayon ($R_{JS}$), légèrement inférieur au rayon correspondant ($R_{SI}$) de l'adaptateur. Dans le cas décrit, ($R_{JS}$) est égal à 8 mm. Cet arc de cercle de rayon ($R_{JS}$) est prolongé par un arc de cercle (9) de rayon ($R_{JR}$), arc de cercle représentant en section méridienne le rebord de jante (8, 9). Ce rayon ($R_{JR}$) est égal au rayon ($R_{RI}$), donc au rayon ($R_{RE}$) du rebord d'adaptateur.

Si (S) est le sommet du rebord de jante (8, 9), (T) le point de tangence entre la partie cylindrique (7) et l'arc de cercle (8), et (K) la distance axiale séparant les points (S) et (T), le diamètre ($\Phi_{JS}$) de la partie cylindrique (7) est alors tel que

$$\sqrt{(\Phi_{JS} + H)^2 + K^2} < \Phi_{SE}$$

pour permettre un montage aisé du pneumatique sur la jante (J). Dans l'exemple étudié, ($\Phi_{JS}$) doit être inférieur à 558,45 mm et choisi égal à 558 mm.

La constitution de l'adaptateur ($S_1$) est montrée sur la figure (3). Outre la nappe ($N_{90}$) de fils ou câbles méridiens entourant la masse de caoutchouc vulcanisé (C) de l'adaptateur ($S_1$), un amas ($N_0$) de fils ou câbles disposés circonférentiellement renforce la portion de l'adaptateur ($S_1$) située entre les deux portions quasi-verticales (56') et (89') de l'adaptateur.

Le caoutchouc (C) est un vulcanisat normal, c'est-à-dire un mélange d'élastomère, de noir de carbone et de différents adjuvants, en particulier de vulcanisation. Ce mélange doit être tel qu'une fois vulcanisé, son module élastique de compression soit supérieur à 8 MPa. Dans l'exemple étudié, il est égal à 17 MPa, sous une compression relative $\epsilon$ égale à 10 %. Comme connu, le module de compression se déduit de la courbe : force uniaxale de compression imposée à une éprouvette de section $S_0$, en fonction de la compression relative $\epsilon$.

Sur la face radialement intérieure de l'adaptateur ($S_1$) sont disposées des bandelettes vulcanisées ($Z_1$, $Z_2$) de mélange de caoutchouc à base d'élastomère butyl, mélange généralement utilisé pour garnir l'intérieur du pneumatique sans chambre, et ayant la propriété d'être étanche à l'air.

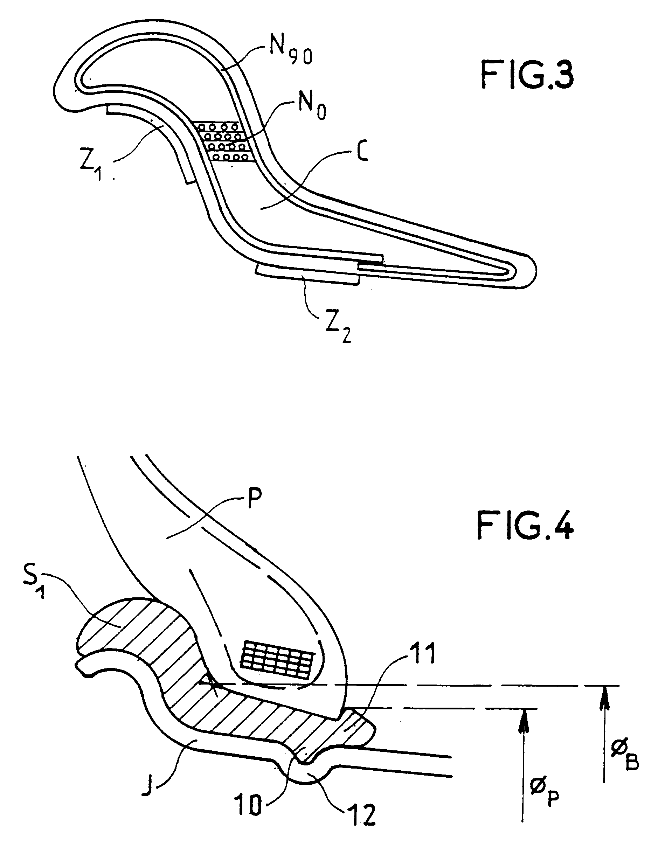

Quant à la figure 4, elle illustre un exemple d'adaptateur à saillie circonférentielle (10) à la base et à protubérance axialement intérieure (11), adaptateur ($S_1$) monté sur une jante (J), elle-même à gorge circonférentielle (12) destinée à recevoir la saillie (10). Le diamètre maximum ($\Phi_P$) de la protubérance est inférieur au diamètre ($\Phi_B$) du bourrelet du pneumatique (B). Cet adaptateur permet un meilleur tenue du pneumatique au décoincement des bourrelets.

**Revendications**

1. Ensemble roulant composé d'un pneumatique (P), d'une jante (J) et deux adaptateurs annulaires ($S_1$, $S_2$) en matériau élastomérique vulcanisé, indépendants, insérés entre les bourrelets (3) du pneumatique (P) et la jante (J), le pneumatique (P) étant un pneumatique de dimensions normalisées sans chambre à air indépendante et destiné à être utilisé sur une jante (J') normalisée ayant des sièges tronconiques et des rebords de jante de hauteur (H), chaque adaptateur ayant deux faces quasi verticales et un contour extérieur (4', 5', 6', 7', 8', 9') adapté d'une part au contour (7, 8, 9) de la jante (J) sur laquelle il repose et d'autre part au contour (4, 5) du bourrelet (3) du pneumatique connu (P), et étant renforcé par un amas $N_o$ de fils ou câbles inextensibles et disposés circonférentiellement, cet amas $N_0$ étant localisé entre les deux faces (56' et 89') quasi verticales de l'adaptateur, caractérisé en ce que :
   - la jante de service (J), destinée à recevoir les adaptateurs ($S_1$, $S_2$) est démunie de gorge et constituée principalement de deux rebords de jante de hauteur (H) et d'un fond de jante cylindrique, dont le diamètre $\varnothing_{JS}$ est tel que

$$\sqrt{(\varnothing_{JS} + H)^2 + K^2} < \varnothing_{SE}$$

   $\varnothing_{SE}$ étant le diamètre nominal de la jante (J') normalement utilisé pour le pneumatique (P) et K étant la distance axiale séparant le sommet du rebord de jante de l'extrémité du fond de jante cylindrique, alors que la largeur (W) de la jante (J) est compris entre 1,05 et 1,10 fois la largeur (A) de la jante (J'), et en ce que
   - le matériau élastomérique qui constitue chaque adaptateur ($S_1$, $S_2$), ayant un module élastique de compression au moins égale à 8 MPq, est entouré par une armature $N_{90}$ formée d'au moins une nappe de fils ou câbles méridiens.

2. Ensemble roulant selon la revendication 1, caractérisé en ce que le pneumatique (P) est un pneumatique destiné à être monte sur une jante (J') normalisée ayant des sièges tronconiques inclinés à 15 ± 1°.

3. Adaptateur conçu pour l'ensemble roulant selon la revendication (2), caractérisé en ce que, vu en section méridienne, le profil (4', 5', 6') radialement extérieur de l'adaptateur ($S_1$) est identique au profil radialement extérieur de la partie siège plus rebord de la jante à sièges tronconiques à 15° sur laquelle est monté normalement le pneumatique (P).

4. Adaptateur selon la revendication 3, caractérisé en ce que, vue en section méridienne, le profil radialement intérieur (7', 8', 9') se compose d'une zone (7') rectiligne faisant avec l'axe de rotation de l'ensemble ($\alpha_i$), tel que 0° $\leq \alpha_i \leq$ 10°, et tel que le diamètre ($\varnothing_{SI}$) de la face intérieure soit compris entre 0,995 fois et 0,985 fois le diamètre ($\varnothing_{JS}$) de la partie cylindrique (7) de la jante de service (J).

5. Adaptateur selon l'une des revendications 3 à 4, caractérisé en ce que, sur la face radialement intérieure de l'adaptateur ($S_1$), d'une part sur la partie cylindrique (6') de cette face et d'autre part sur la partie circulaire (7') de ladite face, sont disposées des bandelettes ($Z_1$, $Z_2$) de matériau vulcanisé étanche aux gaz, par exemple à base d'élastomère butyl.

6. Adaptateur selon l'une des revendications 3 à 5, caractérisé en ce qu'il est muni sur sa face radialement intérieure (6') d'une saillie circonférentielle (10) et d'une protubérance (11) axialement intérieure formant butoir pour la pointe du bourrelet (3) du pneumatique (P).

7. Adaptateur selon l'une des revendications 3 à 5, caractérisé en ce qu'il est pourvu de la valve de gonflage.

8. Ensemble roulant selon l'une des revendications 1 à 2, caractérisé en ce que les parties (9, 8, 7) de la jante (J) devant être recouvertes par les adaptateurs ($S_1$, $S_2$) sont munies d'orifices, rendant impossible le gonflage du pneumatique (P) si les adaptateurs ($S_1$, $S_2$) ne sont pas disposés correctement.

9. Ensemble pour montage et roulage en jumelé caractérisé en ce qu'il est composé de deux ensembles selon la revendication 1.

10. Ensemble selon la revendication 9, caractérisé en ce que les sommets des deux rebords de jante intérieurs sont assemblés entre eux pour ne former qu'une seule jante, fixée au moyeu par un seul disque.

## Claims

1. A rolling assembly formed of a tyre (P), a rim (J) and two independent annular adapters ($S_1$, $S_2$) made of elastomeric vulcanised material and inserted between the beads (3) of the tyre (P) and the rim (J), the tyre (P) being a tyre of standard size without independent inner tube and intended for use on a standard rim (J') having frustoconical seats and rim flanges of height (H), each adapter having two quasi-vertical faces and an outer contour (4', 5', 6', 7', 8', 9') adapted firstly to the contour (7, 8, 9) of the rim (J) on which it rests and secondly to the contour (4, 5) of the bead (3) of the known tyre (P), and being reinforced by a mass $N_0$ of inextensible cords or cables arranged circumferentially, this mass $N_0$ being located between the two quasi-vertical faces (56' and 89') of the adapter, characterised in that

   - the service rim (J), intended to receive the adapters ($S_1$, $S_2$), has no groove and is formed primarily of two rim flanges of height (H) and a cylindrical rim base, the diameter $\varnothing_{JS}$ of which is such that

   $$\sqrt{(\varnothing_{JS} + H)^2 + K^2} < \varnothing_{SE}$$

   $\varnothing_{SE}$ being the nominal diameter of the rim (J') normally used for the tyre (P) and K being the axial distance between the top of the rim flange and the end of the cylindrical rim base, while the width (W) of the rim (J) is between 1.05 and 1.10 times the width (A) of the rim (J'), and

   - in that the elastomeric material forming each adapter ($S_1$, $S_2$), having an elastic modulus of compression at least equal to 8 MPa, is surrounded by a reinforcement $N_{90}$ formed of at least one ply of meridian cords or cables.

2. A rolling assembly according to Claim 1, characterised in that the tyre (P) is a tyre intended to be mounted on a standard rim (J') having frustoconical seats inclined by 15 ± 1°.

3. An adapter designed for the rolling assembly according to Claim 2, characterised in that, seen in meridian section, the radially outer profile (4', 5', 6') of the adapter ($S_1$) is identical to the radially outer profile of the seat part plus flange of the rim having 15° frustoconical seats on which the tyre (P) is normally mounted.

4. An adapter according to Claim 3, characterised in that, seen in meridian section, the radially inner profile (7', 8', 9') is formed of a rectilinear zone (7') forming with the axis of rotation of the assembly [an angle] ($\alpha_i$) such that $0° \leq \alpha_i \leq 10°$, and such that the diameter ($\varnothing_{SI}$) of the inner face is between 0.995 times and 0.985 times the diameter ($\varnothing_{JS}$) of the cylindrical part (7) of the service rim (J).

5. An adapter according to one of Claims 3 to 4, characterised in that on the radially inner face of the adapter ($S_1$), on the one hand, on the cylindrical part (6') of said face and, on the other hand, on the circular part (7') of said face, there are arranged strips ($Z_1$, $Z_2$) of gas-tight vulcanised material, for instance having a base of butyl elastomer.

6. An adapter according to one of Claims 3 to 5, characterised in that on its radially inner face (6') it is provided with a circumferential protrusion (10) and with an axially inner protuberance (11) forming a stop for the toe of the bead (3) of the tyre (P).

7. An adapter according to one of Claims 3 to 5, characterised in that it is provided with the inflation valve.

8. A rolling assembly according to one of Claims 1 to 2, characterised in that the parts (9, 8, 7) of the rim (J) which are to be covered by the adapters ($S_1$, $S_2$) are provided with orifices, making the inflation of the tyre (P) impossible if the adapters ($S_1$, $S_2$) are not arranged correctly.

9. A twin mounting and rolling assembly, characterised in that it is formed of two assemblies according to Claim 1.

10. An assembly according to Claim 9, characterised in that the vertices of the two inner rim flanges are assembled together to form only a single rim which is fastened to the hub by a single disc.

## Patentansprüche

1. Radeinheit bestehend aus einem Luftreifen (P), einer Felge (J) und zwei zwischen den Wulsten (3) des Luftreifens (P) und der Felge (J) eingefügten unabhängigen ringförmigen Adaptern ($S_1$, $S_2$) aus vulkanisiertem Elastomermaterial, wobei der Luftreifen (P) ein schlauchloser Luftreifen mit standardisierten Maßen ist, der vorgesehen ist zur Verwendung an einer standardisierten Felge (J') mit kegelförmigen Sitzen und Felgenhörnern der Höhe (H), jeder Adapter zwei quasi vertikale Flächen und eine äußere Kontur (4', 5', 6', 7', 8', 9') hat, die einerseits an die Kontur (7, 8, 9) der Felge (J), auf der er ruht, und andererseits an die Kontur (4, 5) des Wulstes (3) des an sich bekannten Luftreifens (P) angepaßt ist, und durch eine Ansammlung ($N_0$) von in Umfangsrichtung angeordneten nicht streckbaren Fäden oder Seilen verstärkt ist, wobei diese Ansammlung $N_0$ zwischen den zwei quasi vertikalen Flächen (56' und 89') des Adapters lokalisiert ist, dadurch gekennzeichnet, daß

- die zum Aufnehmen der Adapter ($S_1$, $S_2$) vorgesehene Arbeitsfelge (J) keine Auskehlung hat und im wesentlichen aus zwei Felgenhörnern der Höhe (H) und einem zylindrischen Felgenbett besteht, dessen Durchmesser so gewählt ist, daß $\Phi_{JS}$

$$\sqrt{(\varnothing_{JS} + H)^2 + K^2} < \varnothing_{SE} \; ,$$

wobei $\Phi_{SE}$ der Nenndurchmesser der normalerweise für den Luftreifen (P) verwendeten Felge (J') und K der axiale Abstand zwischen dem Scheitel des Felgenhorns und dem Ende des zylindrischen Felgenbetts ist, wobei die Breite (W) der Felge (J) zwischen dem 1,05fachen und 1,10fachen der Breite (A) der Felge (J') liegt, und daß

- das Elastomermaterial, aus dem die Adapter ($S_1$, $S_2$) gebildet sind und das einen Kompressions-Elastizitätsmodul von wenigstens gleich 8 MPa hat, von einer Bewehrung $N_{90}$ aus wenigstens einer Einlage aus in einer Meridianebene verlaufenden Fäden oder Seilen verstärkt ist.

2. Radeinheit nach Anspruch 1, dadurch gekennzeichnet, daß der Luftreifen (P) ein Luftreifen für die Montage auf einer standardisierten Felge (J') mit unter 15 ± 1° geneigten kegelförmigen Sitzen ist.

3. Adapter für eine Radeinheit nach Anspruch 2, dadurch gekennzeichnet, daß im meridionalen Schnitt das radial äußere Profil (4', 5', 6') des Adapters ($S_1$) identisch mit dem radial äußeren Profil des Horn- und Sitz-Bereichs der Felge mit 15°-Sitzen ist, auf der der Luftreifen (P) normalerweise montiert wird.

4. Adapter nach Anspruch 3, dadurch gekennzeichnet, daß im meridionalen Schnitt das radial innere Profil (7', 8', 9') aus einem geradlinigen Abschnitt (7') besteht, der mit der Drehachse der Radeinheit einen Winkel ($\alpha_i$) mit $0° \leq \alpha_i \leq 10°$ bildet und daß der Durchmesser ($\Phi_{SI}$) der Innenfläche zwischen dem 0,995fachen und dem 0,985fachen des Durchmessers ($\Phi_{JS}$) des zylindrischen Abschnitts (7) der Arbeitsfelge (J) liegt.

5. Adapter nach einem der Ansprüche 3 bis 4, dadurch gekennzeichnet, daß an der radial inneren Fläche des Adapters ($S_1$) einerseits am zylindrischen Abschnitt (6') dieser Fläche und andererseits am kreisförmigen Abschnitt (7') dieser Fläche Streifen ($Z_1$, $Z_2$) aus gasdichtem vulkanisiertem Elastomermaterial, z.B. auf Butylelastomergrundlage, angeordnet sind.

6. Adapter nach einem der Ansprüche 3 bis 5, dadurch gekennzeichnet, daß er an seiner radial inneren Fläche (6') mit einem umlaufenden Vorsprung (10) und einer axialen inneren Ausstülpung (11) versehen ist, die einen Anschlag für die Spitze des Wulstes (3) des Luftreifens (P) bildet.

7. Adapter nach einem der Ansprüche 3 bis 5, dadurch gekennzeichnet, daß er ein Aufpumpventil aufweist.

8. Radeinheit nach einem der Ansprüche 1 bis 2, dadurch gekennzeichnet, daß die Bereiche (9, 8, 7) der Felge (J), die von den Adaptern ($S_1$, $S_2$) bedeckt werden sollen, mit Öffnungen versehen sind, die das Aufpumpen des Luftreifens (P) unmöglich machen, wenn die Adapter ($S_1$, $S_2$) nicht richtig angeordnet sind.

9. Zwillingsradeinheit,
dadurch gekennzeichnet, daß
sie aus zwei Radeinheiten nach Anspruch 1 besteht.

10. Radeinheit nach Anspruch 9, dadurch gekennzeichnet, daß die Scheitel der zwei inneren Felgenhörner miteinander verbunden sind, um eine einzelne Felge zu bilden, die über eine einzelne Scheibe an der Nabe befestigt ist.

FIG.1

FIG.2A

FIG.2B

FIG.2C

FIG.3

FIG.4